(19)

**Europäisches Patentamt**
**European Patent Office**
**Office européen des brevets**

(11) **EP 4 202 777 A1**

(12) **EUROPEAN PATENT APPLICATION**

(43) Date of publication:
**28.06.2023 Bulletin 2023/26**

(21) Application number: **22209284.3**

(22) Date of filing: **24.11.2022**

(51) International Patent Classification (IPC):
**G06N 3/063** (2023.01)   **G06N 3/08** (2023.01)

(52) Cooperative Patent Classification (CPC):
**G06N 3/063; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2021 CN 202111614444**

(71) Applicant: **BEIJING BAIDU NETCOM SCIENCE AND TECHNOLOGY CO. LTD.**
**100085 Beijing (CN)**

(72) Inventors:
 • **LIU, Ji**
  **Beijing, 100085 (CN)**
 • **WU, Zhihua**
  **Beijing, 100085 (CN)**
 • **FENG, Danlei**
  **Beijing, 100085 (CN)**

 • **ZHANG, Minxu**
  **Beijing, 100085 (CN)**
 • **WU, Xinxuan**
  **Beijing, 100085 (CN)**
 • **YAO, Xuefeng**
  **Beijing, 100085 (CN)**
 • **MA, Beichen**
  **Beijing, 100085 (CN)**
 • **DOU, Dejing**
  **Beijing, 100085 (CN)**
 • **YU, Dianhai**
  **Beijing, 100085 (CN)**
 • **MA, Yanjun**
  **Beijing, 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD AND APPARATUS FOR DISTRIBUTING NETWORK LAYERS IN NEURAL NETWORK MODEL**

(57)    The present disclosure provides a method and apparatus for distributing network layers in a neural network model, an electronic device and a readable storage medium, and relates to the field of artificial intelligence technologies, such as deep learning technologies, big data technologies, cloud service technologies, or the like. The method for distributing network layers in a neural network model includes: acquiring a to-be-processed neural network model and a computing device set; generating a target number of distribution schemes according to network layers in the to-be-processed neural network model and computing devices in the computing device set, the distribution schemes including corresponding relationships between the network layers and the computing devices; according to device types of the computing devices, combining the network layers corresponding to the same device type in each distribution scheme into one stage, to obtain a combination result of each distribution scheme; obtaining an adaptive value of each distribution scheme according to the combination result of each distribution scheme; and determining a target distribution scheme from the distribution schemes according to respective adaptive value, and taking the target distribution scheme as a distribution result of the network layers in the to-be-processed neural network model.

Fig. 1

EP 4 202 777 A1

**Description**

**TECHNICAL FIELD**

The present disclosure relates to the field of computer technologies, particularly to the field of artificial intelligence technologies, such as deep learning technologies, big data technologies, cloud service technologies, or the like, and more particularly to a method and apparatus for distributing network layers in a neural network model, an electronic device and a readable storage medium.

**BACKGROUND**

Deep learning models achieve significant success in a number of fields, such as computer vision, natural language processing, recommendation systems, or the like. To improve accuracy of the deep learning model, a neural network model with a large number of layers, neurons, and parameters is usually required to be trained using a large amount of data.

With a gradual increase of scales of the training data and the models, when the neural network model is trained on a single computing device, a lot of time may be taken, and business requirements may not be met.

Therefore, distributed training becomes a basis for training the neural network model. However, on the basis of distributed training, how to distribute a network layer in the neural network model to a suitable computing device for training is crucial to training the neural network model.

**SUMMARY**

According to a first aspect of the present disclosure, there is provided a method for distributing network layers in a neural network model, including: acquiring a to-be-processed neural network model and a computing device set; generating a target number of distribution schemes according to network layers in the to-be-processed neural network model and computing devices in the computing device set, the distribution schemes including corresponding relationships between the network layers and the computing devices; combining, according to device types of the computing devices, the network layers corresponding to a same device type in each distribution scheme into one stage, so as to obtain a combination result of each distribution scheme; obtaining an adaptive value of each distribution scheme according to the combination result of each distribution scheme; and determining a target distribution scheme from the distribution schemes according to respective adaptive value, and taking the target distribution scheme as a distribution result of the network layers in the to-be-processed neural network model.

According to a second aspect of the present disclosure, there is provided an apparatus for distributing network layers in a neural network model, including: an acquiring unit configured to acquire a to-be-processed neural network model and a computing device set; a generating unit configured to generate a target number of distribution schemes according to network layers in the to-be-processed neural network model and computing devices in the computing device set, the distribution schemes including corresponding relationships between the network layers and the computing devices; a combining unit configured to combine, according to device types of the computing devices, the network layers corresponding to a same device type in each distribution scheme into one stage, so as to obtain a combination result of each distribution scheme; a processing unit configured to obtain an adaptive value of each distribution scheme according to the combination result of each distribution scheme; and a distributing unit configured to determine a target distribution scheme from the distribution schemes according to respective adaptive value, and take the target distribution scheme as a distribution result of the network layers in the to-be-processed neural network model.

According to a third aspect of the present disclosure, there is provided an electronic device, including: at least one processor; and a memory connected with the at least one processor communicatively, where the memory stores instructions executable by the at least one processor to enable the at least one processor to perform the method as mentioned above.

According to a fourth aspect of the present disclosure, there is provided a non-transitory computer readable storage medium with computer instructions stored thereon, where the computer instructions are used for causing a computer to perform the method as mentioned above.

According to a fifth aspect of the present disclosure, there is provided a computer program product including a computer program which, when executed by a processor, implements the method as mentioned above.

From the above technical solution, in the present disclosure, the adaptive value of the distribution scheme is obtained by combining the network layers in the distribution scheme, thus improving accuracy and efficiency of obtaining the adaptive value; then, the target distribution scheme is determined according to the obtained adaptive value, thus simplifying steps of determining the target distribution scheme, and improving accuracy and efficiency of determining the target distribution scheme.

It should be understood that the statements in this section are not intended to identify key or critical features of the embodiments of the present disclosure, nor limit the scope of the present disclosure. Other features of the present disclosure will become apparent from the following description.

**BRIEF DESCRIPTION OF THE DRAWINGS**

The drawings are used for better understanding the present solution and do not constitute a limitation of the present disclosure. In the drawings,

Fig. 1 is a schematic diagram according to a first embodiment of the present disclosure;
Fig. 2 is a schematic diagram according to a second embodiment of the present disclosure;
Fig. 3 is a schematic diagram according to a third embodiment of the present disclosure; and
Fig. 4 is a block diagram of an electronic device configured to implement a method for distributing network layers in a neural network model according to the embodiment of the present disclosure.

**DETAILED DESCRIPTION OF EMBODIMENTS**

The following part will illustrate exemplary embodiments of the present disclosure with reference to the drawings, including various details of the embodiments of the present disclosure for a better understanding. The embodiments should be regarded only as exemplary ones. Therefore, those skilled in the art should appreciate that various changes or modifications can be made with respect to the embodiments described herein without departing from the scope and spirit of the present disclosure. Similarly, for clarity and conciseness, the descriptions of the known functions and mechanisms are omitted in the descriptions below.

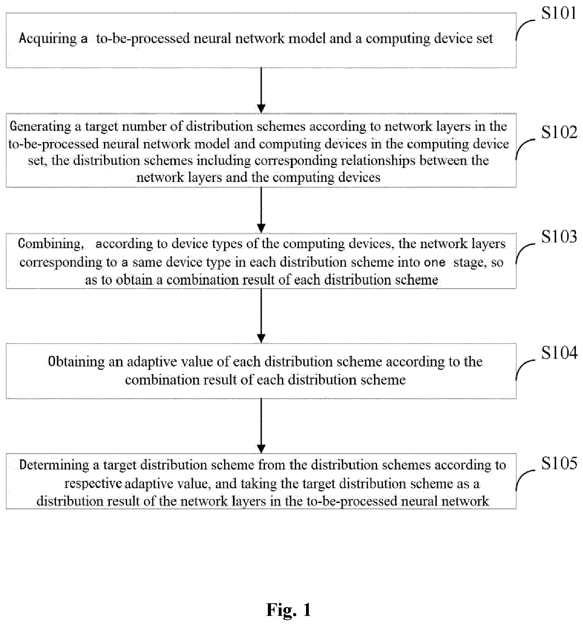

Fig. 1 is a schematic diagram according to a first embodiment of the present disclosure. As shown in Fig. 1, a method for distributing network layers in a neural network model according to this embodiment includes the following steps:

S101: acquiring a to-be-processed neural network model and a computing device set;
S102: generating a target number of distribution schemes according to network layers in the to-be-processed neural network model and computing devices in the computing device set, the distribution schemes including corresponding relationships between the network layers and the computing devices;
S103: combining, according to device types of the computing devices, the network layers corresponding to a same device type in each distribution scheme into one stage, so as to obtain a combination result of each distribution scheme;
S104: obtaining an adaptive value of each distribution scheme according to the combination result of each distribution scheme; and
S105: determining a target distribution scheme from the distribution schemes according to respective adaptive value, and taking the target distribution scheme as a distribution result of the network layers in the to-be-processed neural network model.

In the method for distributing network layers in a neural network model according to this embodiment, after the target number of distribution schemes are generated according to the network layers in the to-be-processed network model and the computing devices in the computing device set, firstly, the network layers in each distribution scheme are combined according to the device type of the computing device; then, the adaptive value of each distribution scheme is obtained according to the combination result of each distribution scheme; and finally, the target distribution scheme serving as the distribution result of the network layers in the to-be-processed neural network model in the distribution schemes is determined according to the obtained adaptive values. In this embodiment, the adaptive value of the distribution scheme is obtained by combining the network layers in the distribution scheme, thus improving accuracy and efficiency of obtaining the adaptive value; then, the target distribution scheme is determined according to the obtained adaptive value, thus simplifying steps of determining the target distribution scheme, and improving accuracy and efficiency of determining the target distribution scheme.

In this embodiment, during the S101 of acquiring the to-be-processed neural network model, a neural network model input at an input end may be used as the to-be-processed neural network model, or a neural network model selected at the input end through a network may be used as the to-be-processed neural network model; in this embodiment, the to-be-processed neural network model acquired in the S101 includes a plurality of network layers; for example, the to-be-processed neural network model includes an input layer, at least one embedded layer, a fully-connected layer, and an output layer.

In this embodiment, during the S101 of acquiring a computing device set, a preset computing device set may be acquired, or a computing device set input at the input end or selected at the input end through the network may be acquired; in this embodiment, the computing device set acquired in the S101 includes plural computing devices, and different computing devices may have different computing structures; for example, the computing device set includes computing devices corresponding to different types of central processing units (CPUs) and/or computing devices corresponding to different types of graphics processing units (GPUs).

In this embodiment, each computing device in the computing device set acquired in the S101 is configured to train the network layer distributed thereto according to corresponding training data.

In this embodiment, after the S101 of acquiring the to-be-processed neural network model and a computing device set, the S102 of generating a target number of distribution schemes according to the network layers in the to-be-processed neural network model and computing devices in the computing device set is executed.

In this embodiment, each distribution scheme generated in the step S102 includes the corresponding relationship between the network layer and the computing device, and one network layer corresponds to one computing device; in the distribution scheme, the network layer corresponding to the computing device is the network layer to be distributed to the computing device for training.

In this embodiment, during the S102, the target number is determined first, and then, the target number of distribution schemes are generated according to the network layers in the to-be-processed neural network model and the computing devices in the computing device set.

In this embodiment, during the S102 of determining the target number, a preset number may be obtained as the target number; in this embodiment, the target number may also be determined according to a batch size of the training data and a preset iteration number; specifically, a product between the batch size of the training data and the preset iteration number is used as the target number, and this embodiment may ensure that the target number has a higher correlation with the preset iteration number used when the target distribution scheme is determined later, so as to improve accuracy of determining the target distribution scheme.

In this embodiment, during the S102 of generating a target number of distribution schemes according to the network layers in the to-be-processed neural network model and computing devices in the computing device set, an adopted optional implementation may include: randomly selecting one computing device from the computing device set as a target computing device of each network layer in the to-be-processed neural network model; generating one distribution scheme according to each network layer and the target computing device of each network layer; and repeating the above steps until a number of the generated distribution schemes reaches the target number.

In other words, in this embodiment, the target number of distribution schemes may be generated by means of random selection, thereby simplifying generation steps of the distribution schemes and reducing calculation complexity when the distribution schemes are generated.

In order to improve the accuracy and efficiency of determining the target distribution scheme, in this embodiment, during the S102 of generating a target number of distribution schemes according to the network layers in the to-be-processed neural network model and computing devices in the computing device set, an adopted optional implementation may include: for each network layer in the to-be-processed neural network model, acquiring running information of the network layer on each computing device in the computing device set, such as running time, memory occupied during running, or the like; taking the computing device with the running information meeting a first preset requirement as the target computing device of the network layer; generating a first distribution scheme according to each network layer and the target computing device of each network layer; generating a second distribution scheme according to each network layer in the to-be-processed neural network model and one computing device randomly selected from the computing device set for each network layer; repeating the step of generating a second distribution scheme until the sum of numbers of the generated first distribution scheme and second distribution schemes reaches the target number.

That is, in this embodiment, the first distribution scheme may be generated according to the running information of the network layer on different computing devices, the generated first distribution scheme may be regarded as a local optimal scheduling scheme, and then, in combination with the plurality of second distribution schemes generated by means of random selection, a distribution scheme set including one first distribution scheme and the plurality of second distribution schemes is obtained; since the distribution scheme set includes one optimal scheme, the efficiency and accuracy of determining the target distribution scheme according to the distribution scheme set may be improved.

In this embodiment, during the S102 of taking the computing device with the running information meeting a first preset requirement as the target computing device of the network layer, the computing device with the minimum running time may be taken as the target computing device of the network layer, or the computing device with the minimum running memory may be taken as the target computing device of the network layer, or the computing device with the minimum product between the running time and the running memory may be taken as the target computing device of the network layer.

In this embodiment, after the S102 of generating a target number of distribution schemes, the S103 of, according to device types of the computing devices, combining the network layers corresponding to the same device type in each distribution scheme into one stage, so as to obtain a combination result of each distribution scheme is executed.

In other words, in this embodiment, the network layers in the to-be-processed neural network model may be divided into a plurality of stages, and the computing devices corresponding to the network layers included in each stage have the same device type, such that the combination result of the distribution scheme includes different stages, thereby improving the accuracy and efficiency of obtaining the adaptive value of the distribution scheme.

For example, if the to-be-processed neural network model includes network layer 1, network layer 2, and network layer 3, and in the distribution scheme generated in the S102 in this embodiment, the network layer 1 is distributed to computing device 1, the network layer 2 is distributed to computing device 2, and the network layer 3 is distributed to computing device 3, and the computing device 1 and the computing device 2 have the same device type, the network layer 1 and the network layer 2 in the distribution scheme are combined into one stage, and the network layer 3 is taken alone as one stage.

In this embodiment, after the S103 of obtaining a combination result of each distribution scheme, the S104 of obtaining an adaptive value of each distribution scheme according to the combination result of each distribution scheme is executed.

Specifically, in this embodiment, during the S104 of obtaining an adaptive value of each distribution scheme according to the combination result of each distribution scheme, an adopted optional implementation may include: for the combination result of each distribution scheme, obtaining calculation time and communication time of each stage according to a number of the computing devices corresponding to each stage in the combination result of the distribution scheme, initial calculation time, initial communication time, and a first batch size; obtaining execution time of each stage according to the calculation time and the communication time of each stage; obtaining throughput of each stage according to the execution time of each stage and a second batch size; obtaining total execution time according to a training time number, a total sample number and the throughput of each stage; and obtaining the adaptive value of the distribution scheme according to the total execution time and the attribute information of the computing device contained in the distribution scheme.

The attribute information of the computing device used during the S104 of obtaining an adaptive value of the distribution scheme in this embodiment may include a number of the computing devices of different device types and/or costs of the computing devices of different device types in the distribution scheme.

That is, in this embodiment, the adaptive value of the distribution scheme is obtained according to the combination result of the distribution scheme and related information in the training process, and the obtained adaptive value may be considered as the cost of using the distribution scheme to distribute the network layer for training the neural network model later; since the network layers are combined in the combination result of the distribution scheme, this embodiment may improve the accuracy of the obtained adaptive value of the distribution scheme.

In this embodiment, during the S104 of obtaining calculation time of each stage according to a number of the computing devices corresponding to each stage in the combination result of the distribution scheme, initial calculation time, and a first batch size, the following formula may be used for calculation:

$$CT_i = \frac{OCT_i}{B_0} * (1 - \alpha_i + \frac{\alpha_i}{k_i})$$

where $CT_i$ represents the calculation time of the ith stage; $OCT_i$ represents the initial calculation time of the ith stage; $B_o$ represents the first batch size, specifically a batch size used in calculation of the initial calculation time; $\alpha_i$ represents a preset parameter corresponding to calculation of the calculation time of the ith stage; $k_i$ represents the number of the computing devices corresponding to the ith stage.

In this embodiment, during the S104 of obtaining communication time of each stage according to a number of the computing devices corresponding to each stage in the combination result of the distribution scheme, initial communication time, and a first batch size, the following formula may be used for calculation:

$$DT_i = \frac{ODT_i}{B_0} * (1 - \beta_i + \frac{\beta_i}{k_i})$$

where $DT_i$ represents the communication time of the ith stage; $ODT_i$ represents the initial communication time of the ith stage; $B_o$ represents the first batch size, specifically a batch size used in calculation of the initial communication time; $\beta_i$ represents a preset parameter corresponding to calculation of the communication time of the ith stage; $k_i$ represents the number of the computing devices corresponding to the ith stage.

In this embodiment, during the S104 of obtaining execution time of each stage according to the calculation time and the communication time of each stage, the calculation time and the communication time are overlapped through parallel execution of the network layers in different stages, such that a maximum value between the calculation time and the communication time is taken as the execution time of different stages, and therefore, in this embodiment, the following formula may be used for calculation:

$$ET_i = \max\{CT_i, DT_i\}$$

where $ET_i$ represents the execution time of the ith stage; $CT_i$ represents the calculation time of the ith stage; $DT_i$ represents the communication time of the ith stage.

In this embodiment, during the S104 of obtaining throughput of each stage according to the execution time of each stage and a second batch size, the following formula may be used for calculation:

$$Throughput_i = \frac{B}{ET_i}$$

where *Throughput* represents the throughput of the ith stage; B represents the second batch size, specifically a batch size of training data (i.e., training data used for training the neural network model); $ET_i$ represents the execution time of the ith stage.

In this embodiment, during the S104 of obtaining total execution time according to a training time number, a total sample number and the throughput of each stage, the throughput of the entire training process may be obtained according to the throughput of each stage, and then, the total execution time corresponding to the entire training process is obtained according to the throughput of the entire training process, the total sample number, and the training time number.

In this embodiment, during the S104, the throughput of the entire training process may be calculated using the following formula:

$$Throughput = \min_{i \in \{1,2,3...S\}} Throughput_i$$

where *Throughput* represents the throughput of the entire training process; *Throughput* represents the throughput of the ith stage and S represents different stages.

In this embodiment, during the S104, the total execution time of the entire training process may be calculated using the following formula:

$$ET = L * \frac{M}{Throughput}$$

where ET represents the total execution time of the whole training process; M represents the total sample number; *Throughput* represents the throughput of the entire training process.

In this embodiment, during the S104 of obtaining the adaptive value of the distribution scheme according to the total execution time and the attribute information of the computing device contained in the distribution scheme, the following formula may be used for calculation:

$$Cost = ET * \sum_{i=t}^{T} p_t * k_t$$

where *Cost* represents the adaptive value of the distribution scheme; ET represents the total execution time of the whole training process; $p_t$ represents a cost of the computing device of device type t; $k_t$ represents the number of the computing devices of device type t; T represents different device types.

In this embodiment, during the S104 of obtaining an adaptive value of each distribution scheme according to the combination result of each distribution scheme, for the combination result of each distribution scheme, the adaptive value of the distribution scheme may also be directly obtained according to a number of the device types and/or the cost of the computing devices of different device types in the combination result of the distribution scheme.

In this embodiment, after the S104 of obtaining an adaptive value of each distribution scheme, the S105 of determining a target distribution scheme from the distribution schemes according to the adaptive values and taking the target distribution scheme as a distribution result of the network layers in the to-be-processed neural network model is executed.

In this embodiment, during the S105 of determining a target distribution scheme from the distribution schemes according to the adaptive values, the distribution scheme with the minimum adaptive value may be used as the target distribution scheme, and then, the determined target scheme may be used as the distribution result of the network layers in the to-be-processed neural network model.

After the S105 of taking the target distribution scheme as a distribution result of the network layers in the to-be-processed neural network model, the method according to this embodiment may further include: distributing the network layers in the to-be-processed neural network model to the corresponding computing devices according to the target distribution scheme; combining the network layers distributed to the computing devices of the same device type into one stage; and performing parallel training on each stage on the corresponding computing device using the training data, so as to finish the training of the to-be-processed neural network model.

It may be understood that, in this embodiment, after the network layers are distributed to the corresponding computing devices according to the target distribution scheme, the distributed network layers may be directly trained by the computing devices using the training data instead of being combined.

In this embodiment, after the S105 of taking the target distribution scheme as a distribution result of the network layers in the to-be-processed neural network model, a computing device configuration scheme of each stage may be generated according to the target distribution scheme, thereby implementing load balancing between the stages.

In this embodiment, during generation of the computing device configuration scheme of each stage according to the target distribution scheme, an adopted optional implementation may include: determining an initial stage according to the target distribution scheme, where in this embodiment, a first stage in the target distribution scheme may be used as the initial stage, or one stage may be randomly selected as the initial stage; determining a number of computing devices in the initial stage according to the first batch size and a throughput constraint; and determining numbers of computing devices in other stages according to the number of the computing devices in the initial stage.

That is, in this embodiment, an appropriate number of computing devices is selected for each stage according to the resulting target distribution scheme, such that the execution time of the stages in each round is similar, thereby achieving load balancing among the stages.

In this embodiment, during determination of the number of the computing devices in the initial stage according to the first batch size and the throughput constraint, the following calculation formula may be used:

$$k_1 > \min\{\frac{\alpha_1 * OCT_1}{Throughput_{\lim it} * B_0 - (1 - \alpha_1) * OCT_1}, \frac{\beta_1 * DCT_1}{Throughput_{\lim it} * B_0 - (1 - \beta_1) * DCT_1}\}$$

where $k_1$ represents the number of the computing devices in the initial stage; $Throughput_{\lim it}$ represents the throughput constraint; $B_0$ represents the first batch size; $OCT_1$ represents initial calculation time of the initial stage; $\alpha_1$ represents a preset parameter corresponding to calculation of the calculation time in the initial stage; $ODT_1$ represents initial communication time in the initial stage; $\beta_1$ represents a preset parameter corresponding to calculation of the communication time in the initial stage.

In this embodiment, during determination of the numbers of the computing devices in other stages according to the number of the computing devices in the initial stage, the following calculation formula may be used:

$$k_i = \frac{\alpha_i}{\frac{OCT_1}{OCT_i} * (1 - \alpha_1 + \frac{\alpha_1}{k_1}) - (1 - \alpha_i)}$$

where $k_i$ represents the number of the computing devices of the ith stage; $\alpha_1$ represents the preset parameter corresponding to the calculation of the calculation time in the initial stage; $\alpha_i$ represents the preset parameter corresponding to the calculation of the calculation time of the ith stage; $k_1$ represents the number of the computing devices in the initial stage; $OCT_1$ represents the initial calculation time of the initial stage; $OCT_i$ represents the initial calculation time of the ith stage.

It may be understood that the above calculation formula is illustrated by taking the example that the running time of each stage is equal to the calculation time when the batch size is large enough; if the batch size is small and the running time of each stage is equal to the communication time, the related parameters of the calculation time in the above formula are required to be replaced with the related parameters of the communication time; for example, $OCT$ is replaced with *DCT,* and $\alpha$ is replaced with $\beta$.

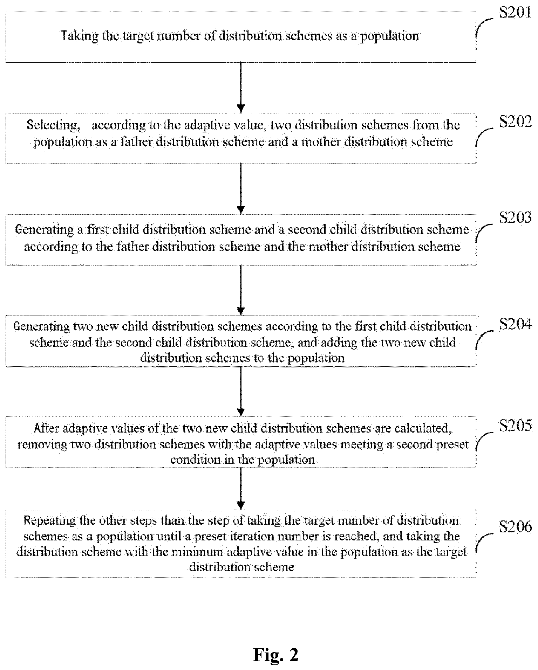

Fig. 2 is a schematic diagram according to a second embodiment of the present disclosure. As shown in Fig. 2, in this embodiment, the S105 of determining a target distribution scheme from the distribution schemes according to the adaptive values specifically includes the following steps:

S201: taking the target number of distribution schemes as a population;

S202: according to the adaptive value, selecting two distribution schemes from the population as a father distribution scheme and a mother distribution scheme;

S203: generating a first child distribution scheme and a second child distribution scheme according to the father distribution scheme and the mother distribution scheme;

S204: generating two new child distribution schemes according to the first child distribution scheme and the second child distribution scheme, and adding the two new child distribution schemes to the population;

S205: after adaptive values of the two new child distribution schemes are calculated, removing two distribution schemes with the adaptive values meeting a second preset condition in the population; and

S206: repeating the other steps than the step of taking the target number of distribution schemes as a population until a preset iteration number is reached, and taking the distribution scheme with the minimum adaptive value in the population as the target distribution scheme.

That is, in this embodiment, a large and complex space is effectively searched with reference to an idea of a genetic algorithm, and the final target distribution scheme is determined through several generations of evolutionary iterations of the distribution schemes according to the adaptive value of each distribution scheme using the obtained target number of distribution schemes, thereby improving the accuracy of the determined target distribution scheme.

In this embodiment, during the S202 of according to the adaptive value, selecting two distribution schemes from the population as a father distribution scheme and a mother distribution scheme, a roulette wheel selection operator may be used to select the father distribution scheme and the mother distribution scheme from the population with the constraint that the distribution scheme with the greater adaptive value is selected with a greater probability.

In this embodiment, during the S203 of generating a first child distribution scheme and a second child distribution scheme according to the father distribution scheme and the mother distribution scheme, a two-point-crossed crossover operator may be used to perform a crossover operation on the selected father distribution scheme and mother distribution scheme with a certain probability, so as to achieve the purpose of generating two child distribution schemes according to the father distribution scheme and the mother distribution scheme.

In addition, in this embodiment, conflict detection may be performed on the generated child distribution scheme, such that the child distribution scheme may satisfy the constraint that the same computing device may only be distributed to one network layer at a time, thus avoiding an invalid distribution scheme.

In this embodiment, during the S204 of generating two new child distribution schemes according to the generated first child distribution scheme and second child distribution scheme, and adding the two new child distribution schemes to the population, a swap mutation operator may be used to randomly swap two computing devices in one distribution scheme with a certain probability, thereby generating the new child distribution scheme.

In this embodiment, during the S205 of removing two distribution schemes meeting a second preset condition in the population, the distribution schemes may be sorted according to a descending order of the adaptive values, and the first two distribution schemes are selected to be removed from the population.

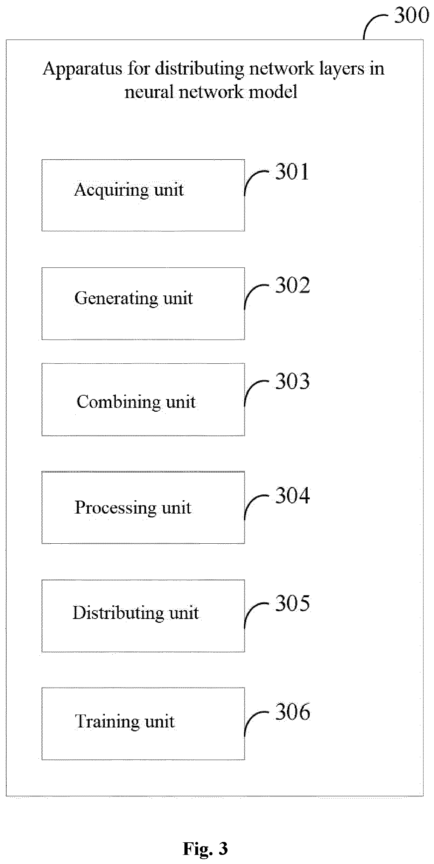

Fig. 3 is a schematic diagram according to a third embodiment of the present disclosure. As shown in Fig. 3, an apparatus 300 for distributing network layers in a neural network model according to this embodiment includes:

an acquiring unit 301 configured to acquire a to-be-processed neural network model and a computing device set;

a generating unit 302 configured to generate a target number of distribution schemes according to network layers in the to-be-processed neural network model and computing devices in the computing device set, the distribution schemes including corresponding relationships between the network layers and the computing devices;

a combining unit 303 configured to combine, according to device types of the computing devices, the network layers corresponding to a same device type in each distribution scheme into one stage, so as to obtain a combination result of each distribution scheme;

a processing unit 304 configured to obtain an adaptive value of each distribution scheme according to the combination result of each distribution scheme; and

a distributing unit 305 configured to determine a target distribution scheme from the distribution schemes according to respective adaptive value, and take the target distribution scheme as a distribution result of the network layers in the to-be-processed neural network model.

When acquiring the to-be-processed neural network model, the acquiring unit 301 may use a neural network model input at an input end as the to-be-processed neural network model, or use a neural network model selected at the input end through a network as the to-be-processed neural network model; the to-be-processed neural network model acquired by the acquiring unit 301 includes a plurality of network layers; for example, the to-be-processed neural network model includes an input layer, at least one embedded layer, a fully-connected layer, and an output layer.

When acquiring the computing device set, the acquiring unit 301 may acquire a preset computing device set, or a computing device set input at the input end or selected at the input end through the network; the computing device set acquired by the acquiring unit 301 includes plural computing devices, and different computing devices may have different computing structures; for example, the computing device set includes computing devices corresponding to different types of central processing units (CPUs) and/or computing devices corresponding to different types of graphics processing units (GPUs).

Each computing device in the computing device set acquired by the acquiring unit 301 is configured to train the network layer distributed thereto according to corresponding training data.

In this embodiment, after the acquiring unit 301 acquires the to-be-processed neural network model and the computing device set, the generating unit 302 generates the target number of distribution schemes according to the network layers in the to-be-processed neural network model and the computing devices in the computing device set.

Each distribution scheme generated by the generating unit 302 includes the corresponding relationship between the network layer and the computing device, and one network layer corresponds to one computing device; in the distribution scheme, the network layer corresponding to the computing device is the network layer distributed to the computing device for training.

The generating unit 302 first determines the target number, and then generates the target number of distribution schemes according to the network layers in the to-be-processed neural network model and the computing devices in the computing device set.

When determining the target number, the generating unit 302 may acquire a preset number as the target number; in this embodiment, the target number may also be determined according to a batch size of the training data and a preset iteration number; specifically, a product between the batch size of the training data and the preset iteration number is used as the target number.

When the generating unit 302 generates the target number of distribution schemes according to the network layers in the to-be-processed neural network model and the computing devices in the computing device set, an adopted optional implementation may include: randomly selecting one computing device from the computing device set as a target computing device of each network layer in the to-be-processed neural network model; generating one distribution scheme according to each network layer and the target computing device of each network layer; and repeating the above steps until a number of the generated distribution schemes reaches the target number.

That is, the generating unit 302 may generate the target number of distribution schemes by means of random selection, thereby simplifying generation steps of the distribution schemes and reducing calculation complexity when the distribution schemes are generated.

In order to improve the accuracy and efficiency of determining the target distribution scheme, when the generating unit 302 generates the target number of distribution schemes according to the network layers in the to-be-processed neural network model and the computing devices in the computing device set, an adopted optional implementation may include: for each network layer in the to-be-processed neural network model, acquiring running information of the network layer on each computing device in the computing device set; taking the computing device with the running information meeting a first preset requirement as the target computing device of the network layer; generating a first distribution scheme according to each network layer and the target computing device of each network layer; generating a second distribution scheme according to each network layer in the to-be-processed neural network model and one computing device randomly selected from the computing device set for each network layer; repeating the step of generating a second distribution scheme until the sum of numbers of the generated first distribution scheme and second distribution schemes reaches the target number.

That is, the generating unit 302 may generate the first distribution scheme according to the running information of the network layer on different computing devices, the generated first distribution scheme may be regarded as a local optimal scheduling scheme, and then, in combination with the plurality of second distribution schemes generated by means of random selection, a distribution scheme set including one first distribution scheme and the plurality of second distribution schemes is obtained; since the distribution scheme set includes one optimal scheme, the efficiency and accuracy of determining the target distribution scheme according to the distribution scheme set may be improved.

In this embodiment, when taking the computing device with the running information meeting the first preset requirement as the target computing device of the network layer, the generating unit 302 may take the computing device with the minimum running time as the target computing device of the network layer, or take the computing device with the minimum running memory as the target computing device of the network layer, or take the computing device with the minimum product between the running time and the running memory as the target computing device of the network layer.

In this embodiment, after the generating unit 302 generates the target number of distribution schemes, the combining unit 303, according to device types of the computing devices, combines the network layers corresponding to the same device type in each distribution scheme into a stage, so as to obtain a combination result of each distribution scheme.

That is, the combining unit 303 may divide the network layers in the to-be-processed neural network model into a plurality of stages, and the computing devices corresponding to the network layers included in each stage have the same device type, such that the combination result of the distribution scheme includes different stages, thereby improving the accuracy and efficiency of obtaining the adaptive value of the distribution scheme.

In this embodiment, after the combining unit 303 obtains the combination result of each distribution scheme, the processing unit 304 obtains the adaptive value of each distribution scheme according to the combination result of each distribution scheme.

Specifically, when the processing unit 304 obtains the adaptive value of each distribution scheme according to the combination result of each distribution scheme, an adopted optional implementation may include: for the combination result of each distribution scheme, obtaining calculation time and communication time of each stage according to a number of the computing devices corresponding to each stage in the combination result of the distribution scheme, initial calculation time, initial communication time, and a first batch size; obtaining execution time of each stage according to the calculation time and the communication time of each stage; obtaining throughput of each stage according to the execution time of each stage and a second batch size; obtaining total execution time according to a training time number, a total sample number and the throughput of each stage; and obtaining the adaptive value of the distribution scheme according to the total execution time and the attribute information of the computing device contained in the distribution scheme.

The attribute information of the computing device used when the processing unit 304 obtains the adaptive value of the distribution scheme may include a number of the computing devices of different device types and/or costs of the computing devices of different device types in the distribution scheme.

That is, the processing unit 304 obtains the adaptive value of the distribution scheme according to the combination result of the distribution scheme and related information in the training process, and the obtained adaptive value may be considered as the cost of using the distribution scheme to distribute the network layer for later training of the neural network model; since the network layers are combined in the combination result of the distribution scheme, the processing unit 304 may improve the accuracy of the obtained adaptive value of the distribution scheme.

When obtaining the adaptive value of each distribution scheme according to the combination result of each distribution scheme, the processing unit 304 may, for the combination result of each distribution scheme, directly obtain the adaptive value of the distribution scheme according to a number of the device types and/or the cost of the computing devices of different device types in the combination result of the distribution scheme.

In this embodiment, after the processing unit 304 obtains the adaptive value of each distribution scheme, the distributing unit 305 determines the target distribution scheme from the distribution schemes according to the adaptive values and takes the target distribution scheme as the distribution result of the network layers in the to-be-processed neural network model.

When determining the target distribution scheme from the distribution schemes according to the adaptive values, the distributing unit 305 may use the distribution scheme with the minimum adaptive value as the target distribution scheme, and then use the determined target scheme as the distribution result of the network layers in the to-be-processed neural network model.

When the distributing unit 305 determines the target distribution scheme from the distribution schemes according to the adaptive values, an adopted optional implementation may include: taking the target number of distribution schemes as a population; according to the adaptive value, selecting two distribution schemes from the population as a father distribution scheme and a mother distribution scheme; generating a first child distribution scheme and a second child distribution scheme according to the father distribution scheme and the mother distribution scheme; generating two new child distribution schemes according to the first child distribution scheme and the second child distribution scheme, and adding the two new child distribution schemes to the population; after adaptive values of the two new child distribution schemes are calculated, removing two distribution schemes with the adaptive values meeting a second preset condition in the population; and repeating the other steps than the step of taking the target number of distribution schemes as a population until a preset iteration number is reached, and taking the distribution scheme with the minimum adaptive value in the population as the target distribution scheme.

That is, the distributing unit 305 effectively searches a large and complex space with reference to an idea of a genetic algorithm, and determines the final target distribution scheme through several generations of evolutionary iterations of the distribution schemes according to the adaptive value of each distribution scheme using the obtained target number of distribution schemes, thereby improving the accuracy of the determined target distribution scheme.

When selecting the two distribution schemes from the population as the father distribution scheme and the mother distribution scheme according to the adaptive value, the distributing unit 305 may use a roulette wheel selection operator to select the father distribution scheme and the mother distribution scheme from the population with the constraint that the distribution scheme with the greater adaptive value is selected with a greater probability.

When generating the first child distribution scheme and the second child distribution scheme according to the father distribution scheme and the mother distribution scheme, the distributing unit 305 may use a two-point-crossed crossover operator to perform a crossover operation on the selected father distribution scheme and mother distribution scheme with a certain probability, so as to achieve the purpose of generating two child distribution schemes according to the father distribution scheme and the mother distribution scheme.

When generating the two new child distribution schemes according to the generated first child distribution scheme and second child distribution scheme, and adding the two new child distribution schemes to the population, the distributing unit 305 may use a swap mutation operator to randomly swap two computing devices in one distribution scheme with a certain probability, thereby generating the new child distribution scheme.

When removing the two distribution schemes meeting the second preset condition in the population, the distributing unit 305 may sort the distribution schemes according to a descending order of the adaptive values, and select and remove the first two distribution schemes from the population.

After taking the target distribution scheme as the distribution result of the network layers in the to-be-processed neural network model, the distributing unit 305 may also generate a computing device configuration scheme of each stage according to the target distribution scheme, thereby implementing load balancing between the stages.

When the distributing unit 305 generates the computing device configuration scheme of each stage according to the target distribution scheme, an adopted optional implementation may include: determining an initial stage according to the target distribution scheme; determining a number of computing devices in the initial stage according to the first batch size and a throughput constraint; and determining numbers of computing devices in other stages according to the number of the computing devices in the initial stage.

That is, the distributing unit 305 selects an appropriate number of computing devices for each stage according to the resulting target distribution scheme, such that the execution time of the stages in each round is similar, thereby achieving load balancing among the stages.

The apparatus 300 for distributing network layers in a neural network model according to this embodiment may further include a training unit 306 configured to, after the distributing unit 305 takes the target distribution scheme as the distribution result of the network layers in the to-be-processed neural network model, distribute the network layers in the to-be-processed neural network model to the corresponding computing devices according to the target distribution scheme; combine the network layers distributed to the computing devices of the same device type into one stage; and perform parallel training on each stage on the corresponding computing device using the training data, so as to finish the training of the to-be-processed neural network model.

It may be understood that, after distributing the network layers to the corresponding computing devices according to the target distribution scheme determined by the distributing unit 305, the training unit 306 may directly train the distributed network layers by the computing devices using the training data instead of being combined.

In the technical solution of the present disclosure, the acquisition, storage and application of involved user personal information are in compliance with relevant laws and regulations, and do not violate public order and good customs.

According to the embodiment of the present disclosure, there are also provided an electronic device, a readable storage medium and a computer program product.

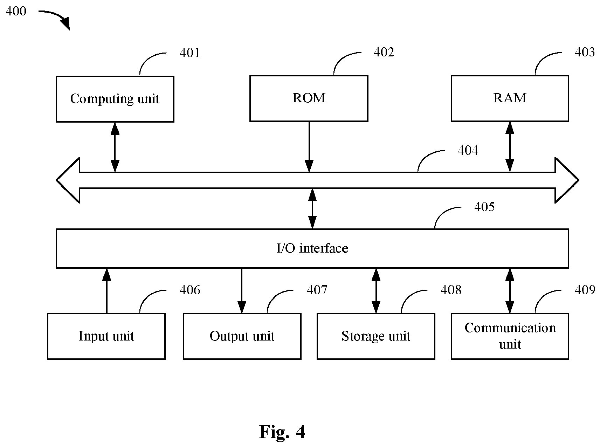

Fig. 4 is a block diagram of an electronic device configured to implement a method for distributing network layers in a neural network model according to the embodiment of the present disclosure. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 4, the device 400 includes a computing unit 401 which may perform various appropriate actions and processing operations according to a computer program stored in a read only memory (ROM) 402 or a computer program loaded from a storage unit 408 into a random access memory (RAM) 403. Various programs and data necessary for the operation of the device 400 may be also stored in the RAM 403. The computing unit 401, the ROM 402, and the RAM 403 are connected with one other through a bus 404. An input/output (I/O) interface 405 is also connected to the bus 404.

The plural components in the device 400 are connected to the I/O interface 405, and include: an input unit 406, such as a keyboard, a mouse, or the like; an output unit 407, such as various types of displays, speakers, or the like; the storage unit 408, such as a magnetic disk, an optical disk, or the like; and a communication unit 409, such as a network card, a modem, a wireless communication transceiver, or the like. The communication unit 409 allows the device 400 to exchange information/data with other devices through a computer network, such as the Internet, and/or various telecommunication networks.

The computing unit 401 may be a variety of general and/or special purpose processing components with processing and computing capabilities. Some examples of the computing unit 401 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 401 performs the methods and processing operations described above, such as the method for distributing network layers in a neural network model. For example, in some embodiments, the method for distributing network layers in a neural network model may be implemented as a computer software program tangibly contained in a machine readable medium, such as the storage unit 408.

In some embodiments, part or all of the computer program may be loaded and/or installed into the device 400 via the ROM 402 and/or the communication unit 409. When the computer program is loaded into the RAM 403 and executed by the computing unit 401, one or more steps of the method for distributing network layers in a neural network model described above may be performed. Alternatively, in other embodiments, the computing unit 401 may be configured to perform the method for distributing network layers in a neural network model by any other suitable means (for example, by means of firmware).

Various implementations of the systems and technologies described herein may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided to a processor or a controller of a general purpose computer, a special purpose computer, or other programmable data processing apparatuses, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable medium may be a tangible medium which may contain or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server, also called a cloud computing server or a cloud host, and is a host product in a cloud computing service system, so as to overcome the defects of high management difficulty and weak service expansibility in conventional physical host and virtual private server (VPS) service. The server may also be a server of a distributed system, or a server incorporating a blockchain.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

The above-mentioned implementations are not intended to limit the scope of the present disclosure. It should be understood by those skilled in the art that various modifications, combinations, sub-combinations and substitutions may be made, depending on design requirements and other factors. Any modification, equivalent substitution and improvement made within the spirit and principle of the present disclosure all should be included in the extent of protection of the present disclosure.

**Claims**

1. A method for distributing network layers in a neural network model, comprising:

   acquiring (S101) a to-be-processed neural network model and a computing device set;
   generating (S102) a target number of distribution schemes according to network layers in the to-be-processed neural network model and computing devices in the computing device set, the distribution schemes comprising corresponding relationships between the network layers and the computing devices;
   combining (S103), according to device types of the computing devices, the network layers corresponding to a same device type in each distribution scheme into one stage, so as to obtain a combination result of each distribution scheme;
   obtaining (S104) an adaptive value of each distribution scheme according to the combination result of each distribution scheme; and
   determining (S105) a target distribution scheme from the distribution schemes according to respective adaptive value, and taking the target distribution scheme as a distribution result of the network layers in the to-be-processed neural network model.

2. The method according to claim 1, wherein the target number is obtained according to a batch size of training data and a preset iteration number.

3. The method according to any one of claims 1 to 2, wherein the generating the target number of distribution schemes according to the network layers in the to-be-processed neural network model and computing devices in the computing device set comprises:

   for each network layer in the to-be-processed neural network model, acquiring running information of the network layer on each computing device in the computing device set;
   taking the computing device with the running information meeting a first preset requirement as a target computing device of the network layer;
   generating a first distribution scheme according to each network layer and the target computing device of each network layer;
   generating a second distribution scheme according to each network layer in the to-be-processed neural network model and one computing device randomly selected from the computing device set for each network layer; and
   repeating the generating the second distribution scheme until the sum of numbers of the first distribution scheme and the second distribution schemes reaches the target number.

4. The method according to any one of claims 1 to 3, wherein the obtaining the adaptive value of each distribution scheme according to the combination result of each distribution scheme comprises:

   for the combination result of each distribution scheme, obtaining calculation time and communication time of each stage according to a number of the computing devices corresponding to each stage in the combination result of the distribution scheme, initial calculation time, initial communication time, and a first batch size;
   obtaining execution time of each stage according to the calculation time and the communication time of each stage;

obtaining throughput of each stage according to the execution time of each stage and a second batch size;

obtaining total execution time according to a training time number, a total sample number and the throughput of each stage; and

obtaining the adaptive value of the distribution scheme according to the total execution time and the attribute information of the computing device contained in the distribution scheme.

5. The method according to any one of claims 1 to 4, wherein the determining the target distribution scheme from the distribution schemes according to respective adaptive value comprises:

taking (S201) the target number of distribution schemes as a population;

selecting (S202), according to the adaptive value, two distribution schemes from the population as a father distribution scheme and a mother distribution scheme;

generating (S203) a first child distribution scheme and a second child distribution scheme according to the father distribution scheme and the mother distribution scheme;

generating (S204) two new child distribution schemes according to the first child distribution scheme and the second child distribution scheme, and adding the two new child distribution schemes to the population;

after adaptive values of the two new child distribution schemes are calculated, removing (S205) two distribution schemes with the adaptive values meeting a second preset condition in the population; and

repeating (S206) the processing other than the taking the target number of distribution schemes as the population until a preset iteration number is reached, and taking the distribution scheme with the minimum adaptive value in the population as the target distribution scheme.

6. The method according to any one of claims 1 to 5, further comprising:

after taking the target distribution scheme as the distribution result of the network layers in the to-be-processed neural network model, distributing the network layers in the to-be-processed neural network model to the corresponding computing devices according to the target distribution scheme;

combining the network layers distributed to the computing devices of the same device type into one stage; and

performing parallel training on each stage on the corresponding computing device using the training data, so as to finish the training of the to-be-processed neural network model.

7. An apparatus (300) for distributing network layers in a neural network model, comprising:

an acquiring unit (301) configured to acquire (S101) a to-be-processed neural network model and a computing device set;

a generating unit (302) configured to generate (S102) a target number of distribution schemes according to network layers in the to-be-processed neural network model and computing devices in the computing device set, the distribution schemes comprising corresponding relationships between the network layers and the computing devices;

a combining unit (303) configured to combine (S103), according to device types of the computing devices, the network layers corresponding to a same device type in each distribution scheme into one stage, so as to obtain a combination result of each distribution scheme;

a processing unit (304) configured to obtain (S104) an adaptive value of each distribution scheme according to the combination result of each distribution scheme; and

a distributing unit (305) configured to determine (S105) a target distribution scheme from the distribution schemes according to respective adaptive value, and take the target distribution scheme as a distribution result of the network layers in the to-be-processed neural network model.

8. The apparatus according to claim 7, wherein the target number is obtained according to a batch size of training data and a preset iteration number.

9. The apparatus according to any one of claims 7 to 8, wherein when generating the target number of distribution schemes according to the network layers in the to-be-processed neural network model and the computing devices in the computing device set, the generating unit (302) specifically:

for each network layer in the to-be-processed neural network model, acquires running information of the network layer on each computing device in the computing device set;

takes the computing device with the running information meeting a first preset requirement as a target computing device of the network layer;

generates a first distribution scheme according to each network layer and the target computing device of each network layer;

generates a second distribution scheme according to each network layer in the to-be-processed neural network model and one computing device randomly selected from the computing device set for each network layer; and repeats the generating the second distribution scheme until the sum of numbers of the first distribution scheme and the second distribution schemes reaches the target number.

10. The apparatus according to any one of claims 7 to 9, wherein when obtaining the adaptive value of each distribution scheme according to the combination result of each distribution scheme, the processing unit (304) specifically:

for the combination result of each distribution scheme, obtains calculation time and communication time of each stage according to a number of the computing devices corresponding to each stage in the combination result of the distribution scheme, initial calculation time, initial communication time, and a first batch size;

obtains execution time of each stage according to the calculation time and the communication time of each stage;

obtains throughput of each stage according to the execution time of each stage and a second batch size;

obtains total execution time according to a training time number, a total sample number and the throughput of each stage; and

obtains the adaptive value of the distribution scheme according to the total execution time and the attribute information of the computing device contained in the distribution scheme.

11. The apparatus according to any one of claims 7 to 10, wherein when determining the target distribution scheme from the distribution schemes according to respective adaptive value, the distributing unit (305) specifically:

takes (S201) the target number of distribution schemes as a population;

selects (S202), according to the adaptive value, two distribution schemes from the population as a father distribution scheme and a mother distribution scheme;

generates (S203) a first child distribution scheme and a second child distribution scheme according to the father distribution scheme and the mother distribution scheme;

generates (S204) two new child distribution schemes according to the first child distribution scheme and the second child distribution scheme, and adds the two new child distribution schemes to the population;

after adaptive values of the two new child distribution schemes are calculated, removes (S205) two distribution schemes with the adaptive values meeting a second preset condition in the population; and

repeats (S206) the processing other than the taking the target number of distribution schemes as the population until a preset iteration number is reached, and takes the distribution scheme with the minimum adaptive value in the population as the target distribution scheme.

12. The apparatus according to any one of claims 7 to 11, further comprising: a training unit (306) configured to, after the distributing unit (305) takes the target distribution scheme as the distribution result of the network layers in the to-be-processed neural network model,

distribute the network layers in the to-be-processed neural network model to the corresponding computing devices according to the target distribution scheme;

combine the network layers distributed to the computing devices of the same device type into one stage; and perform parallel training on each stage on the corresponding computing device using the training data, so as to finish the training of the to-be-processed neural network model.

13. An electronic device, comprising:

at least one processor; and

a memory connected with the at least one processor communicatively;

wherein the memory stores instructions executable by the at least one processor to enable the at least one processor to perform the method according to any one of claims 1 to 6.

14. A non-transitory computer readable storage medium with computer instructions stored thereon, wherein the computer instructions are used for causing a computer to perform the method according to any one of claims 1 to 6.

15. A computer program product comprising a computer program which, when executed by a processor, implements the method according to any one of claims 1 to 6.

Acquiring a to-be-processed neural network model and a computing device set — S101

Generating a target number of distribution schemes according to network layers in the to-be-processed neural network model and computing devices in the computing device set, the distribution schemes including corresponding relationships between the network layers and the computing devices — S102

Combining, according to device types of the computing devices, the network layers corresponding to a same device type in each distribution scheme into one stage, so as to obtain a combination result of each distribution scheme — S103

Obtaining an adaptive value of each distribution scheme according to the combination result of each distribution scheme — S104

Determining a target distribution scheme from the distribution schemes according to respective adaptive value, and taking the target distribution scheme as a distribution result of the network layers in the to-be-processed neural network — S105

**Fig. 1**

Taking the target number of distribution schemes as a population — S201

Selecting, according to the adaptive value, two distribution schemes from the population as a father distribution scheme and a mother distribution scheme — S202

Generating a first child distribution scheme and a second child distribution scheme according to the father distribution scheme and the mother distribution scheme — S203

Generating two new child distribution schemes according to the first child distribution scheme and the second child distribution scheme, and adding the two new child distribution schemes to the population — S204

After adaptive values of the two new child distribution schemes are calculated, removing two distribution schemes with the adaptive values meeting a second preset condition in the population — S205

Repeating the other steps than the step of taking the target number of distribution schemes as a population until a preset iteration number is reached, and taking the distribution scheme with the minimum adaptive value in the population as the target distribution scheme — S206

**Fig. 2**

300

Apparatus for distributing network layers in
neural network model

Acquiring unit 301

Generating unit 302

Combining unit 303

Processing unit 304

Distributing unit 305

Training unit 306

**Fig. 3**

**Fig. 4**

Europäisches
Patentamt

European
Patent Office

Office européen
des brevets

## EUROPEAN SEARCH REPORT

Application Number

EP 22 20 9284

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mirhoseini Azalia ET AL: "Device Placement Optimization with Reinforcement Learning", , 25 June 2017 (2017-06-25), XP093043822, DOI: 10.48550/arxiv.1706.04972 Retrieved from the Internet: URL:https://arxiv.org/abs/1706.04972 [retrieved on 2023-05-03] * abstract * * section 3; page 1 - pages 2,5; figures 1,3-7 * | 1-15 | INV. G06N3/063 G06N3/08 |
| A | CN 110 533 183 A (UNIV SOUTHEAST) 3 December 2019 (2019-12-03) * claim 1 * | 1-15 | |
| A | ZHENHENG TANG ET AL: "Communication-Efficient Distributed Deep Learning: A Comprehensive Survey", ARXIV.ORG, CORNELL UNIVERSITY LIBRARY, 201 OLIN LIBRARY CORNELL UNIVERSITY ITHACA, NY 14853, 10 March 2020 (2020-03-10), XP081621034, * sections I.B, I.C, II; figure 1 * | 1-15 | TECHNICAL FIELDS SEARCHED (IPC) G06N |

The present search report has been drawn up for all claims

| Place of search | Date of completion of the search | Examiner |
|---|---|---|
| Munich | 3 May 2023 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 22 20 9284**

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2023

| Patent document cited in search report | Publication date | Patent family member(s) | Publication date |
|---|---|---|---|
| CN 110533183 A | 03-12-2019 | NONE | |

EPO FORM P0459

For more details about this annex : see Official Journal of the European Patent Office, No. 12/82